Europäisches Patentamt

European Patent Office

Office européen des brevets

(19)

(11) Veröffentlichungsnummer: **0 513 697 A2**

# (12) EUROPÄISCHE PATENTANMELDUNG

(21) Anmeldenummer: **92107827.5**

(51) Int. Cl.5: **F16C 19/30**, F16C 25/06

(22) Anmeldetag: **09.05.92**

(30) Priorität: **18.05.91 DE 4116435**

(43) Veröffentlichungstag der Anmeldung:
**19.11.92 Patentblatt 92/47**

(84) Benannte Vertragsstaaten:
**DE FR GB IT SE**

(71) Anmelder: **FORD-WERKE AKTIENGESELLSCHAFT**
**Henry-Ford-Strasse 1, Postfach 600402**
**W-5000 Köln 60(DE)**

(84) **DE IT SE**

(71) Anmelder: **FORD MOTOR COMPANY LIMITED**
**Eagle Way**
**Brentwood Essex CM13 3BW(GB)**

(84) **GB**

(71) Anmelder: **FORD FRANCE S. A.**
**344, avenue Napoléon Bonaparte**
**F-92506 Rueil-Malmaison(FR)**

(84) **FR**

(72) Erfinder: **Fuss, Josef**
**Herderstrasse 9**
**W-5013 Elsdorf(DE)**
Erfinder: **Adams, Gerd**
**Foerster-Sons-Strasse 18**
**W-5653 Leichlingen 1(DE)**

(74) Vertreter: **Ritzkowsky, Harald, Dipl.-Ing.**
**Ford-Werke Aktiengesellschaft**
**Patentabteilung NH/DRP Henry-Ford-Strasse**
**1**
**W-5000 Köln 60(DE)**

(54) **Axialwälzlager-Baueinheit mit axialer Einstellbarkeit.**

(57) Bei einer Axialwälzlager-Baueinheit mit axialer Einstellbarkeit, mit zumindest einer Axiallaufscheibe (2), einer Vielzahl von durch einen Käfig (3) geführten Wälzelementen (4) und einer mit der Axiallaufscheibe (2) verrastbaren Abstandsscheibe (5) veränderlicher Dicke, besteht die Abstandsscheibe (5) aus einem Paar von Einstellringen (6 und 7) die mit zueinander komplementären, je zwei oder mehrere konzentrische Steigungsflächen (8 und 9 bzw. 10 und 11) mit einem bestimmten Steigungswinkel aufweisenden Innenflächen aufeinanderliegen und wobei der eine Einstellring (7) an einem Umfang (12) über einen Vorsprung 13 gegen Verdrehen festgelegt und der andere Einstellring (6) an einem Umfang (14) über eine Verzahnung (15) relativ hierzu verdrehbar und hierdurch das gesamte Axialmaß stufenlos veränderbar ist.

FIG.4

Die Erfindung bezieht sich auf eine Axialwälzlager-Baueinheit mit axialer Einstellbarkeit, der im Oberbegriff des Patentanspruches 1 erläuterten Art.

Aus der DE-OS 39 14 175 ist eine Axialwälzlager-Baueinheit dieser Art bekannt.

Es handelt sich hierbei um ein Axialnadellager mit zumindest einer Axiallaufscheibe, einer Vielzahl von durch einen Käfig geführten Wälzelementen und einer mit der Axiallaufscheibe verrastbaren Abstandsscheibe von veränderlicher, jedoch vorbestimmter axialer Dicke, die nach Vermessen der entsprechenden Lageranordnung in einem Getriebegehäuse durch Auswahl aus einem Satz von vorbestimmten Abstandsscheiben mit unterschiedlichen vorbestimmten Dicken ausgewählt und zu einer Axialwälzlager-Baueinheit zusammengefügt wird, die als ein Bauteil montierbar ist.

Aus der DE-OS 39 04 659 ist eine Axialwälzlager-Baueinheit mit axialer Einstellbarkeit, etwa der oben erwähnten Bauart bekannt, wobei zwischen den Wälzelementen und einer Axiallaufscheibe eine Abstandsscheibe veränderlicher, jedoch vorbestimmter axialer Dicke einlegbar ist.

Beide Axialwälzlager-Baueinheiten weisen den wesentlichen Nachteil auf, daß sie auf der sogenannten Auswahlmontage beruhen, die es erforderlich macht, daß entweder alle innerhalb einer gegebenen Lageranordnung zu montierenden Bauteile vermessen werden müssen oder aber der Abstand von einem Teil der vormontierten Bauteile zum Getriebegehäuse vermessen werden muß und danach durch Auswahl eine entsprechend dicke Abstandsscheibe aus einer vorgegebenen Anzahl von Abstandsscheiben mit unterschiedlichen vorbestimmten Dicken ausgewählt und montiert werden muß.

Hierfür sind aufwendige Meßeinrichtungen erforderlich und darüber hinaus ist das Bereithalten einer Vielzahl von in der Bearbeitung verhältnismäßig teurer, genau tolerierter Abstandsscheiben erforderlich, deren Teilebereitstellung durch den nicht vorhersehbaren wechselnden Bedarf schwierig ist. Ein weiterer Nachteil besteht darin, daß Abstandsscheiben abgestuft sind und somit je nach Anzahl der Abstufungen zusätzliche Toleranzen beinhalten. Des weiteren kommt die Dickentoleranz der Auswahlscheibe hinzu.

Aus der DE-PS 36 42 463 ist eine Vorrichtung zum spielfreien oder vorgespannten axialen Einstellen von Lageranordnungen bekannt, die aus einem Paar von Einstellringen besteht, die mit zueinander komplementären, je zwei oder mehrere konzentrische Steigungsflächen mit einem bestimmten Steigungswinkel aufweisenden Innenflächen aufeinanderliegen, von denen ein Einstellring an einem Umfang gegen Verdrehen festgelegt und der andere Einstellring relativ hierzu verdrehbar und hierdurch das gesamte Axialmaß der Einstellringe stufenlos veränderbar ist.

Aus der DE-OS 27 43 489 ist eine Einstellvorrichtung mit solchen Steigungsflächen bekannt, bei der das eine Element über eine Außenverzahnung relativ zum anderen Element verdrehbar ist.

Die Aufgabe der Erfindung ist es, eine Axialwälzlager-Baueinheit der im Oberbegriff des Patentanspruches 1 erläuterten Art derart zu verbessern, daß die aufwendige und teure Auswahlmontage vermieden und durch eine unmittelbare axiale stufenlose Einstellbarkeit ersetzt wird, wobei der hierfür erforderliche Bauaufwand, insbesondere da solche Einstellringe z.B. aus einem geeignetem Kunststoffmaterial hergestellt werden können, äußerst gering gehalten werden kann.

Gemäß der Erfindung wird diese Aufgabe gelöst, indem an einer Axiallager-Baueinheit gemäß dem Oberbegriff des Patentanspruches 1, die im Kennzeichenteil des Patentanspruches aufgezeigten Merkmale angewendet werden.

Dadurch, daß die Abstandsscheibe aus einem Paar von Einstellringen besteht, die mit zueinander komplementären, je zwei oder mehrere konzentrische Steigungsflächen, mit einem bestimmten Steigungswinkel aufweisenden Innenflächen aufeinanderliegen, wobei der eine Einstellring an einem Umfang über einem Vorsprung gegen Verdrehen festlegbar und der andere Einstellring über an einem Umfang ausgebildete Verzahnung relativ hierzu verdrehbar ist, kann das Gesamtaxialmaß stufenlos veränderbar eingestellt werden.

In den Ansprüchen 2 bis 5 sind zweckmäßige Ausgestaltungen der Erfindung näher erläutert.

Die Erfindung wird anhand eines in den Zeichnungen dargestellten Ausführungsbeispieles näher erläutert. Es zeigt:

Fig. 1 eine Axialansicht einer Axialwälzlager-Baueinheit von der Seite der Abstandsscheibe her;

Fig. 2 einen vertikalen Schnitt entlang der Linie II-II in Fig. 1;

Fig. 3 eine Axialansicht der Axialwälzlager-Baueinheit von der Seite des Käfigs der Wälzelemente;

Fig. 4 eine stark vergrößerte Schnittdarstellung durch den oberen Teil der Fig. 2, aus der die Einzelteile besser ersichtlich sind und

Fig. 5 eine stark vergrößerte Schnittdarstellung durch den unteren Teil der Fig. 2, aus der die Einzelteile besser ersichtlich sind.

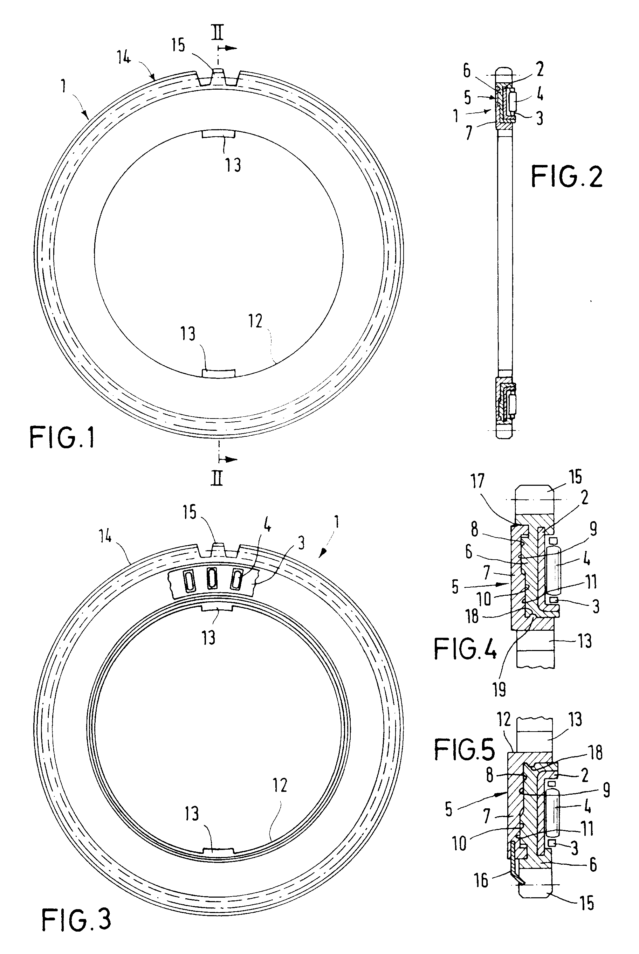

Die in den Figuren 1 bis 3 gezeigte Axialwälzlager-Baueinheit 1 besteht im wesentlichen aus zumindest einer Axiallaufscheibe 2, einer Vielzahl von durch einen Käfig 3 geführten Wälzelementen 4 und zumindest einer mit der Axiallaufscheibe 2 verrastbaren Abstandsscheibe 5.

Gemäß der Erfindung besteht die Abstandsscheibe 5 aus einem Paar von Einstellringen 6 und 7, die mit zueinander komplementären, je zwei oder mehrere konzentrische Steigungsflächen 8 und 9 bzw. 10 und 11, die mit einem bestimmten Steigungswinkel aufweisenden Innenflächen aufeinanderliegen.

Der eine Einstellring 7 ist hierbei an einem Umfang, z.B. am Innenumfang 12 über einen Vorsprung 13 gegen Verdrehen festgelegt.

Der andere Einstellring 6 kann die Axiallaufscheibe 2 verrastet aufnehmen oder die Axiallaufscheibe 2 kann im Einstellring 6 mit eingegossen sein.

Der andere Einstellring 6 ist an einem Umfang, hier am Aussenumfang 14 mit einer Verzahnung 15 oder sonstigen Formschluß versehen, an der er unter Einsatz eines entsprechenden Werkzeuges gegenüber dem anderen Einstellring 7 relativ verdrehbar und hierdurch das Gesamtaxialmaß der Axialwälzlager-Baueinheit 1 stufenlos veränderbar ist.

Die Einstellringe 6 und 7 können hierbei vorzugsweise zwei oder mehrere radial ineinanderliegende Paare von sich über 360 Grad erstreckende Steigungsflächen 8 und 9 bzw. 10 und 11 aufweisen, wobei die Paare von Steigungsflächen bezüglich ihres Steigungsanfanges und -endes winkelmäßig zueinander entsprechend versetzt angeordnet sind, wobei die Größe des Versatzwinkels reziprok zur Anzahl der Paare von Steigungsflächen ist.

Somit ist der Betrag der Relativverdrehung der beiden Einzelringe 6 und 7 zueinander entsprechend der Anzahl der Paare von Steigungsflächen proportional um eine Abstützung der Axialwälzlager-Baueinheit am gesamten Umfang zu gewährleisten.

Die Einstellringe 6 und 7 können vorzugsweise aus einem geeigneten Kunststoffmaterial durch Formspritzen hergestellt werden, wodurch sich die Möglichkeit ergibt, daß das Festlegen der vorgenommenen Relativverdrehung auch durch Ultraschallverschweißen der beiden Einstellringe 6 und 7 an einer oder mehreren Stellen 17, siehe Fig. 4, erfolgen kann. Alternativ hierzu kann an einem der beiden Einstellringe eine federnde Zunge 16 ausgebildet sein, die mit der Verzahnung 15 eine vorgenommene Einstellung festlegend zusammenwirkt, siehe Fig. 5.

Diese Alternative ist jedoch nicht stufenlos, sondern entsprechend der Teilung der Verzahnung gestuft. Die Teilung kann jedoch wesentlich feiner als in der Fig. gezeigt ausgeführt werden.

Es muß noch darauf hingewiesen werden, daß, wie bei Kunststoffbauteilen bekannt, eine Verrastung der beiden Einstellringe 6 und 7 durch z.B. einer an zusammenwirkenden Umfängen angeordneten Ringnut 18 und darin eingreifenden Nasen 19 vorgenommen werden kann.

Ebenso muß darauf hingewiesen werden, daß die Anordnung der Vorsprünge, die den einen Einstellring gegen Verdrehen sichern und die Anordnung der Verzahnung am anderen Einstellring je nach den gegebenen Einbauverhältnissen variiert werden kann, d.h. die entsprechende Festlegung gegen Verdrehen kann an einem Außenumfang und die entsprechende Verzahnung zur Einstellung kann an einem Innenumfang ausgebildet werden.

**Patentansprüche**

1. Axialwälzlager-Baueinheit mit axialer Einstellbarkeit, mit zumindest einer Axiallaufscheibe (2), einer Vielzahl von durch einen Käfig (3) geführten Wälzelementen (4) und einer mit der Axiallaufscheibe (2) verrastbaren Abstandsscheibe (5) veränderlicher Dicke,
   **dadurch gekennzeichnet,** daß
   - die Abstandsscheibe (5) aus einem Paar von Einstellringen (6 und 7) besteht, die mit zueinander komplementären, je zwei oder mehrere konzentrische Steigungsflächen (8 und 9 bzw. 10 und 11) mit einem bestimmten Steigungswinkel aufweisenden Innenflächen aufeinanderliegen, wobei
   - der eine Einstellring (7) an einem Außen- oder Innenumfang (12) über einen Vorsprung (13) gegen Verdrehen festlegbar und
   - der andere Einstellring (6) über an einem Innen- oder Außenumfang (14) ausgebildete Verzahnung (15) relativ hierzu verdrehbar und hierdurch das gesamte Axialmaß stufenlos veränderbar ist.

2. Axialwälzlager-Baueinheit nach Anspruch 1,
   **dadurch gekennzeichnet,** daß
   - die Einstellringe (6 und 7) zwei oder mehrere radial ineinanderliegende Paare von sich über 360 Grad erstreckende Steigungsflächen (8 und 9 bzw. 10 und 11) aufweisen und die Paare von Steigungsflächen bezüglich ihres Steigungsanfanges und -endes winkelmäßig zueinander versetzt angeordnet sind, wobei die Größe des Versatzwinkels reziprok zur Anzahl der Paare von Steigungsflächen ist.

3. Axialwälzlager-Baueinheit nach Anspruch 1,
   **dadurch gekennzeichnet,** daß
   - die Einstellringe (6 und 7) aus einem geeigneten Kunststoffmaterial durch Spritzformen hergestellt sind und

- über eine Ringnut (18) im einen Teil und über Nasen (19) am anderen Teil miteinander verrastet sind.

4. Axialwälzlager-Baueinheit nach Anspruch 1, **dadurch gekennzeichnet,** daß
   - die Einstellringe (6 und 7) aus einem geeigneten Kunststoffmaterial durch Spritzformen hergestellt sind und
   - nach erfolgter Relativverdrehung zur Einstellung zur Festlegung an ein bis drei örtlichen Stellen durch Ultraschallverschweißung miteinander verbunden werden.

5. Axialwälzlager-Baueinheit nach Anspruch 1, **dadurch gekennzeichnet,** daß
   - die Einstellringe (6 und 7) aus einem geeigneten Kunststoffmaterial durch Formspritzen hergestellt sind und
   - an einem der Ringe (7) alternativ eine Rastzunge (16) mit an- oder eingeformt ist, die mit der Verzahnung (15) die relativ verdrehte Lage festlegend zusammenwirkt.

FIG.1

FIG.2

FIG.3

FIG.4

FIG.5